# EUROPEAN PATENT APPLICATION

(11) **EP 1 008 401 A2**
(43) Date of publication of application: **14.06.2000**
(21) Application number: 99124576.2
(22) Date of filing: 09.12.1999
(51) Int. Cl.: B21D 53/84, B21D 7/06

(54) **Method of manufacturing arm member**

(30) Priority: 09.12.1998 JP 35017498
(71) Applicant: SHOWA ALUMINUM CORPORATION, Sakaishi, Osaka (JP)
(72) Inventor: Kato, Rentaro, Komaki-shi, Aichi-ken (JP); Ogawa, Yuichi, Komaki-shi, Aichi-ken (JP); Hamano, Hidemitsu, Sakaishi, Osaka (JP); Nishikawa, Naoki, Sakaishi, Osaka (JP); Tochigi, Masaharu, Sakaishi, Osaka (JP)
(74) Representative: Viering, Jentschura & Partner

(57) **Abstract**

An arm member includes a bar-like main body (10) of a predetermined shape and a joint member (26) attached to at least one end of the main body (10). A method of manufacturing the arm member includes the steps of manufacturing a hollow straight main body (10), attaching a joint member (26) to at least one end of the straight main body (10), and bending the straight main body (10) with the joint member (26) into a predetermined shape in accordance with a mounting space.

## Description

### BACKGROUND OF THE INVENTION

### 1. Field of the Invention

This invention relates to a method of manufacturing an arm member, such as an automobile suspension arm and an engine mount, and more particularly, to a method of manufacturing an arm member including a bar-like main body of a predetermined shape and a joint member connected to an end of the main body.

### 2. Description of Prior Art

An arm member for use as an automobile suspension arm member, such as an upper arm, a lower arm, a trailing arm and a torsion arm, is provided with a main body of a predetermined shape and at least one joint member connected to one end of the main body.

A conventional method of manufacturing such an arm member includes the steps of: casting a non-hollow bar-like main body having a desired shape, such as a generally U-shape, corresponding to a mounting space; and attaching a joint member to the end of the main body.

However, according to the aforementioned conventional method, problems may be encountered in attaching the joint member to the end of the main body because the other end of the main body obstructs the attaching operation of the joint member. In addition, the obtained arm member was heavy due to the non-hollow main member.

### SUMMARY OF THE INVENTION

The present invention is made in view of the aforementioned technical background. It is an object of the present invention to provide a method of manufacturing an arm member by which a joint member can be easily attached to a main body and a light weight arm member can be obtained.

In order to attain the aforementioned object, according to the present invention, a method of manufacturing an arm member comprising a bar-like main body of a predetermined shape and a joint member attached to at least one end of the main body, includes the steps of: manufacturing a hollow straight main body; attaching a joint member to at least one end of the straight main body; bending the straight main body with the joint member into a predetermined shape in accordance with a mounting space.

In the aforementioned method, since the main body is made of a hollow member, the arm member can be light in weight. Furthermore, since the step of bending the main body is performed after the step of attaching the joint member to the straight main body, during the step of attaching the joint member to one end of the main body, the other end of the main body does not obstruct the attaching operation of the joint member. This enhances the attaching operation of the joint member to the main body.

In the present invention, it is preferable that the step of bending the main body be performed by bending the straight main body in a direction perpendicular to an axis thereof by and between a punch and a receiving die having a forming recess corresponding to the punch. According to this step, the end portions of the main body are not required to be cut off because the end portions are not gripped by a bending machine such as a pipe bender. This enhances the yield of the main body and simplifies the manufacturing steps.

In the present invention, it is preferable that the method includes a further step of pressing an end of the main body bent by and between the receiving die and the punch by using a pressing die in a bending direction of the main body. According to this step, since the main body is further bent by an amount corresponding the expected springback of the main body, an arm member having an accurate dimension can be easily obtained. Furthermore, no additional step of correcting the main body is required, resulting in the simplification of the manufacturing steps.

In the present invention, it is preferable that the main body has a tensile strength more than 10 kgf/mm² but less than 50 kgf/mm², and that the main body is bent to have a bending radius of at least twice an external diameter of the main body. The reasons for using the main body having the aforementioned tensile strength are as follows. If the tensile strength is 10 kgf/mm² or less, the arm member would not meet the required strength. On the other hand, if the tensile strength is 50 kgf/mm² or more, the bending operation becomes difficult because of the excess rigidity of the main body.

Furthermore, even in the case where the tensile strength falls within in the aforementioned range, if the main body is bent such that a bending radius becomes less than twice an external diameter of the main body, the bent portion may have defects, such as wrinkles and/or cracks, or it may be crashed. This results in low strength reliability. Accordingly, it is preferable that the main body has a tensile strength more than 10 kgf/mm² but less than 50 kgf/mm², and that the main body is bent to have a bending radius at least twice an external diameter thereof. This can solve the aforementioned drawbacks. As a result, the arm member with the required strength can be easily obtained. Furthermore, the arm member having a bent portion with high strength reliability can be provided.

### BRIEF DESCRIPTION OF THE DRAWINGS

Other objects and advantages of the present invention will become apparent from the detailed description of the preferred embodiment with reference to the attached drawings, wherein:
Fig. 1A is a front view of an arm member manufactured according to the present invention;
Fig. 1B is a side view of the arm member shown in Fig. 1A;
Fig. 1C is a cross-sectional view taken along the lines 1 -1 in Fig. 1A;
Fig. 2A is a front view of the main body and a pair of joint members before attaching the joint members to the main body;
Fig. 2B is an enlarged perspective view showing the joint member and the end portion of the main body before attaching the joint member to the main body;
Fig. 3A is an enlarged cross-sectional view showing the end portion of the main body and the joint member inserted into the end portion;
Fig. 3B is an enlarged cross-sectional view showing the joining step of joining the joint member to the main body by a friction agitation joining method;
Fig. 4A is a front view of the arm member after joining the joint members to the main body;
Fig. 4B is a perspective view partially showing the arm member shown in Fig. 4A;
Fig. 4C is an enlarged cross-sectional view of the arm member shown in Fig. 4A;
Fig. 5 is a front view of the arm member before bending the main body by a punch and a receiving die;
Fig. 6 illustrates a step of bending the main body into a U-shape by the punch and the receiving die; and
Fig. 7 illustrates a step of further pressing the end portions of the main body by a pair of pressing dies.

### DETAILED DESCRIPTION OF THE PREFERRED EMBODIMENTS

A method of manufacturing an arm member according to the present invention will be explained with reference to the attached drawings.

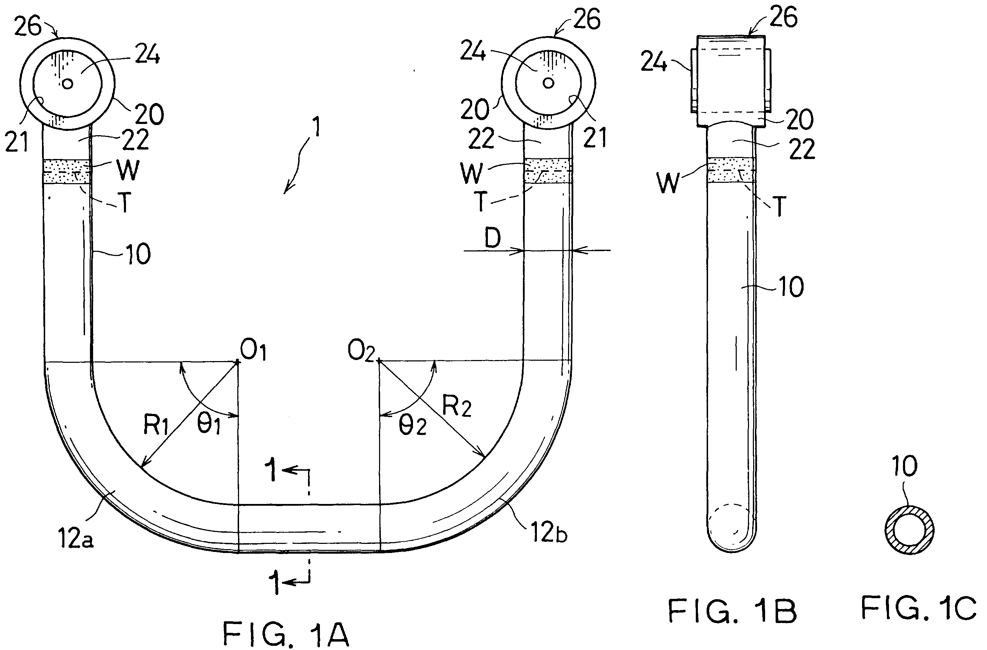

In Fig. 1A, the reference numeral 1 denotes an arm member manufactured according to the present invention. The arm member 1 is used for an automobile suspension arm.

The arm member 1 includes a main body 10 made of an aluminum or aluminum alloy extruded pipe of a circular cross-section and a pair of joint members 26 and 26 (i.e., bush mounting members). The main body 10 has a generally U-shape. The joint members 26 and 26 are integrally connected to both ends of the U-shaped main body 10. In Fig. 1A, the reference letter "W" denotes a joined portion (welded portion) of the main body 10 and joint member 26.

The main body 10 has two arc-shaped bent portions 12a and 12b at longitudinal middle portions thereof.

In Fig. 1A, the reference letter "R1(R2)" denotes a bending radius of the bent portion 12a (12b) of the main body 10, i.e., the distance from the center of curvature O1 (O2) of the bent portion 12a (12b) to the inside curved outer surface of the bent portion 12a (12b). The reference letter "θ1" (θ2) denotes a bending angle of the bent portion 12a (12b). In this embodiment, the bending angles θ1 and θ2 are set to 90°, respectively. The reference letter "D" denotes an external diameter of the main body 10. In this arm member 1, the main body 10 is bent so that each of the bending radii R1 and R2 become at least twice the external diameter D of the main body 10, respectively.

The joint member 26 is a forged article made of an aluminum or aluminum alloy, and has a bush mounting portion 20 for mounting a cylindrical vibroisolating bush 24 with a rubber elastic portion. The bush mounting portion 20 has a bush mounting bore 21 of a circular cross-section in which the vibroisolating bush 24 is forcibly fitted.

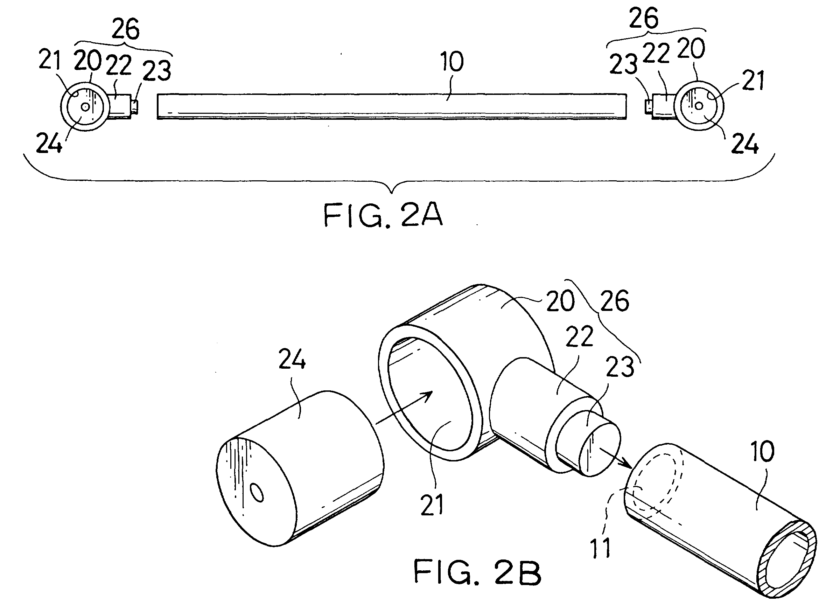

As shown in Fig. 2B, the joint member 26 is provided with a connecting portion 22 of a circular cross-section integrally protruded from the bush mounting portion 20. On the end surface of the connecting portion 22, a fitting protrusion 23 of a circular cross-section having a diameter smaller than that of the connecting portion 22 is coaxially and integrally provided. The external diameter of the connecting portion 22 is generally the same as the external diameter D of the main body 10. The external diameter of the fitting protrusion 23 is generally the same as an internal diameter of an end opening 11 of the main body 10.

Next, the method of manufacturing the aforementioned arm member 1 will be explained.

As shown in Fig. 2A, a first step is to manufacture a straight hollow main body with a predetermined length. Since the main body 10 is made of a hollow member, a lightweight arm member 1 can be obtained. The hollow member can be obtained by an extrusion. When the step of manufacturing the hollow main body 10 is performed by an extrusion, the main body 10 can be effectively manufactured at low cost. It is preferable that the hollow main body 10 has a tensile strength of more than 10 kgf/mm² but less than 50 kgf/mm². The aforementioned tensile strength satisfies the required strength of the arm member 1 while allowing an easy bending operation of the main body 10.

Next step is to attach the aforementioned joint members 26 and 26 to the ends of the straight main body 10. The step of attaching the joint member 26 to the end of the main body 10 can be performed by fusion welding, such as arc welding (MIG and TIG welding), plasma welding, laser welding and electron beam welding. Employed in this embodiment is friction agitation joining (welding) method which generates much less joining heat than that in the fusion welding. A friction agitation joining method, one of solid joining (welding) methods, has advantages such as that any kind of metals can be used for the main body 10 and joint member 26, and that less thermal fatigue due to joining heat is caused. Therefore, it is preferable to employ a friction agitation joining method for the aforementioned step of attaching the joint member 26 to the main body 10.

The attaching step according to a friction agitation joining method will be explained as follows.

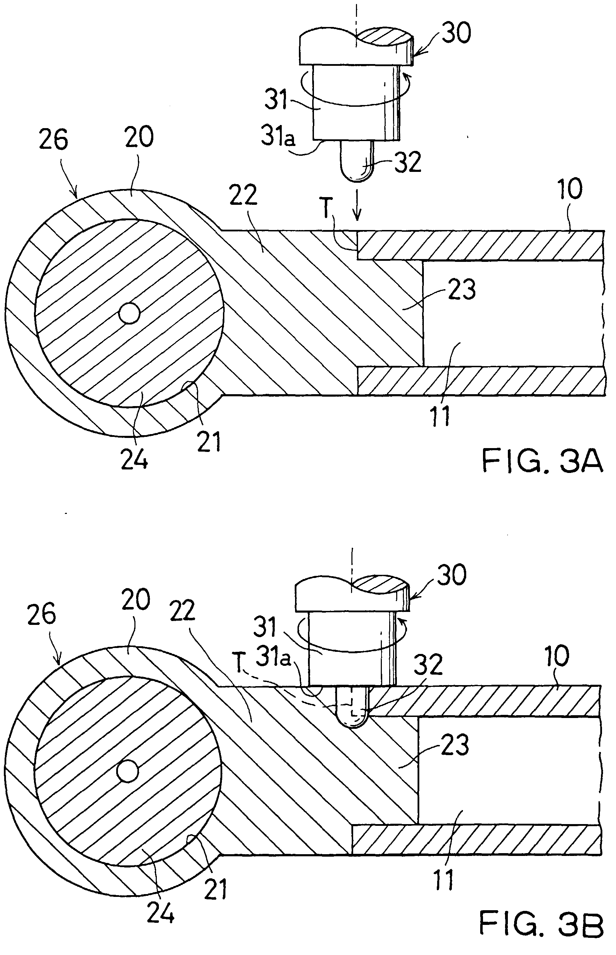

First, the fitting protrusion 23 of the joint member 26 is fitted into the end opening 11 of the main body 10 until the shoulder of the connecting portion 22 is butted to the end of the main body 10. Then, as shown in Figs. 3A and 3B, a butted portion T where the shoulder of the connecting portion 22 and the end of the main body 10 are butted, is joined, or welded, by a friction agitation joining method.

In Fig. 3A, the reference numeral 30 denotes a joining device used in a friction agitation joining method. The joining device 30 is provided with a column-shaped rotor 31 and a pin-shaped probe 32 having a diameter smaller than that of the rotor 31. The probe 32 is coaxially and integrally provided to an end surface 31a of the rotor 31, so that the probe 32 rotates together with the rotor 31. The rotor 31 and probe 32 are made of heat resisting material which is harder than that of the main body 10 and joint member 26 and endurable against friction heat. The probe 32 has, on its surface, convex portions (not shown) for agitating materials.

The probe 32 is inserted into the butted portion T while rotating the rotor 31. As shown in Fig. 3B, it is preferable that the probe 32 is inserted into the butted portion T until the tip end (the lower end) of the probe 32 reaches the fitting protrusion 23 because this results in a firm joining between the main body 10 and joint member 26. It is also preferable that the end surface 31a of the rotor 31 is pressed onto the outer surfaces of the connecting portion 22 and main body 10 so that friction heat can be generated therebetween to enhance the joining process. This not only prevents the softened and agitated materials from being, scattered but also makes the surface of the joined portion W smooth.

Then, the joining device 30 is advanced along the circumference of the butted portion T with the probe 32 inserted in the butted portion T. Alternatively, the main body 10 and joint member 26 may be rotated about the axis of the main body 10 so that the butted portion T passes the probe 32.

In the case where the probe 32 of the joining device 30 is advanced along the circumference of the butted portion T, no portion of the arm member obstructs the advancing operation of the joining device 30. Therefore, the advancing movement of the joining device 30 can be performed easily.

In the case where the main body 10 and joint member 26 are rotated about the axis of the main body 10 to join the butted portion T, the other end of the main body 10 does not obstruct the rotation of the main body 10 and joint member 26. Furthermore, since the center of gravity of the main body 10 and joint member 26 is located on the axis of the main body 10, the main body 10 and joint member 26 can be rotated smoothly.

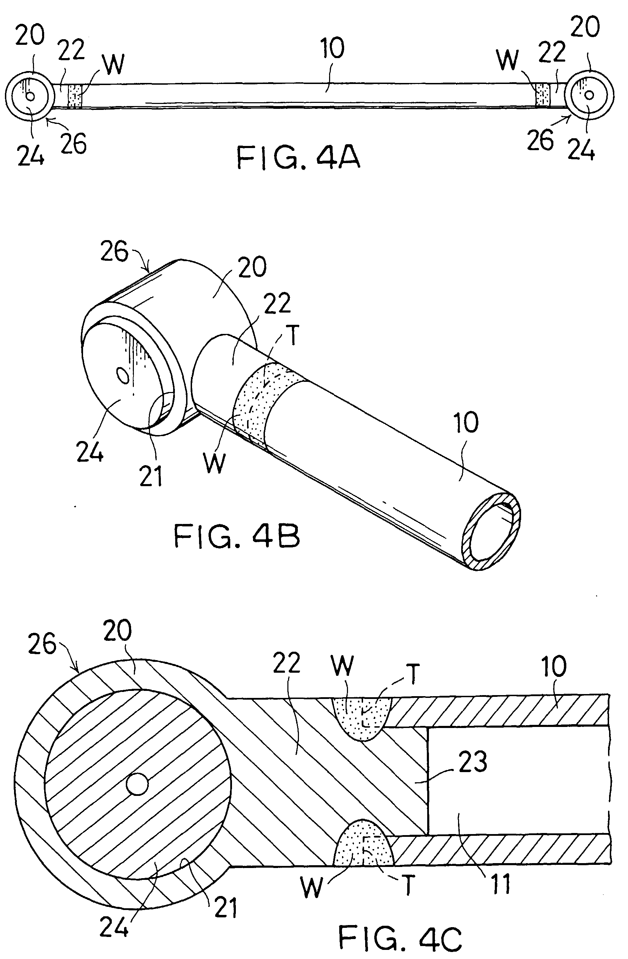

Thus, the step of joining the joint member 26 to the main body 10 may be performed by advancing the probe 32 of the joining device 30, or rotating the main body 10 and joint member 26. The portion of the main body 10 and joint member 26 where the probe 32 contacts, will be softened by the friction heat generated by the rotating probe 32 and/or end surface 31a of the rotor 31. The softened material is then agitated by the rotating probe 32. In accordance with the advancing movement of the probe 32 or the rotational movement of the main body 10 and joint member 26, the softened and agitated material is plastically fluidized to go around the probe 32 and to fill up a groove formed behind the probe 32. Then, the material will be cooled and solidified by the immediate loss of the friction heat. This phenomenon will be repeated with the advancing movement of the probe 32 or the rotational movement of the main body 10 and joint member 26, resulting in an integral joining of the butted portion T along the entire circumference thereof, as shown in Figs. 4A to 4C. Thus, the main body 10 and joint member 26 are joined firmly at the butted portion T.

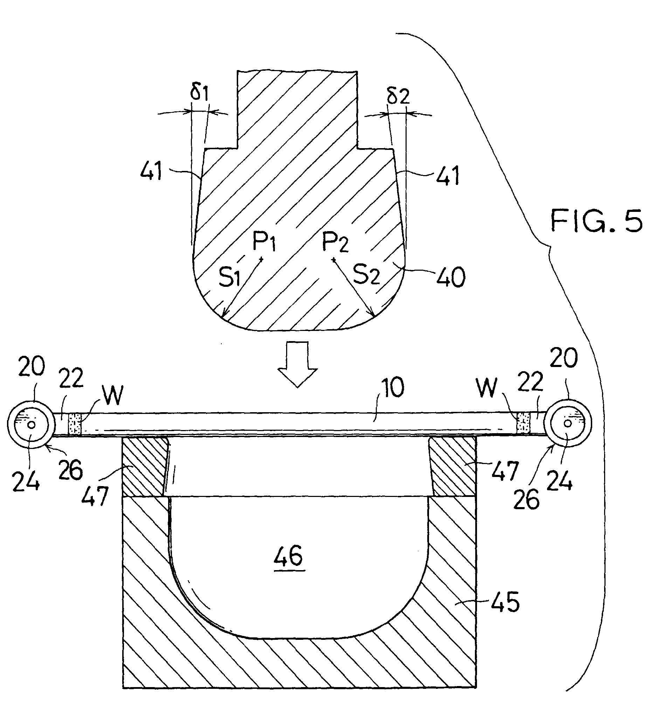

After the step of welding the joint member 26 and 26 to both ends of the straight main body 10, the main body 10 is bent into a predetermined shape. In this embodiment, the main body 10 is bent generally into a U-shape. As shown in Fig. 5, the bending step is performed by pressing the main body 10 by and between a punch 40 and a receiving die 45 having a forming concave portion 46 corresponding to the punch 40.

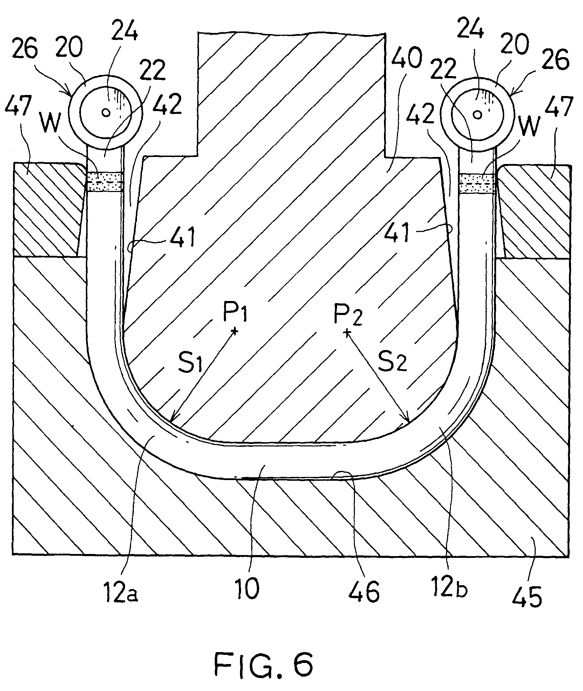

The punch 40 is attached to a lifting device (not shown) by which the punch is moved upward and downward. The radius S1 (S2) of the end corner of the punch 40 corresponds to the predetermined bending radius R1 (R2) of the bent portion 12a (12b) of the main body 10 shown in Fig. 1A. This punch 40 bends the main body 10 such that the bending radius R1 (R2) at the bent portion 12a (12b) of the main body 10 becomes at least twice the external diameter of the main body 10. In Fig. 5, the reference letters P1 and P2 denote the center of curvature of the two corners of the punch 40. The punch 40 has both side surfaces 41 and 41 inwardly tapered toward the basal end thereof. By providing a tapered angle δ1 (δ2) to the side surface 41 (41) of the punch 40, as shown in Fig. 6, a gap 42 (42) is formed between the tapered side surface 41(41) of the punch 40 and the end portion of the main body 10 in the forming concave portion 46 of the receiving die 45. In this embodiment, the tapered angle δ1 (δ2) is set to the same amount as the expected springback of the main body 10.

As shown in Fig. 5, the receiving die 45 is provided with a pair of pressing dies 47 and 47 disposed near the opening of the forming concave portion 46 so as to oppose each other. Each of the pressing dies 47 and 47 is used to further press the end portions of the main body 10 toward the bending direction.

The bending step of the main body 10 will be performed by utilizing the aforementioned punch 40 and receiving die 45 as follows. As shown in Fig. 5, the main body 10 is placed on the pressing dies 47 and 47. Thereafter, the punch 40 is descended to press the main body 10. As a result, the main body 10 is bent generally into a U-shape in the forming concave portion 46 of the receiving die 45, as shown in Fig. 6. In this state, each bent portion 12a (12b) of the main body 10 has the bending radius R1 (R2) at least twice the external diameter D of the main body 10. Since the main body 10 is made of a hollow member which is easy to bend, the bent portion 12a (12b) with a desired shape can be easily obtained.

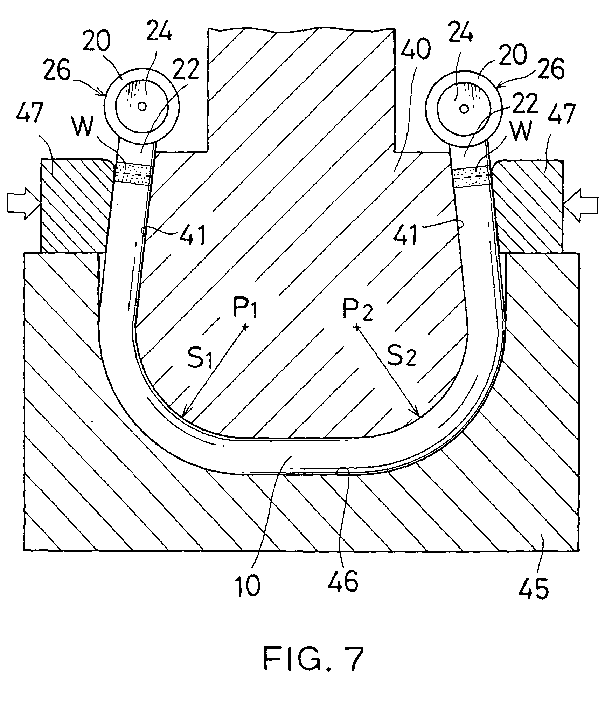

Thus, the main body 10 bent in a U-shape can be obtained by removing it from the receiving die 45. However, in this case, the main body 10 will open slightly such that the distance between the opposing end portions becomes slightly larger than the predetermined distance; this is due to its springback. This requires an additional step of correcting the arm member to obtain an accurate dimension. Accordingly, in this embodiment, as shown in Fig. 7, both ends of the main body 10 are pressed by the pressing dies 47 and 47 to further bend the main body 10 by an amount corresponding to the expected springback. Thereafter, the pressing dies 47 and 47 is released. As a result, the main body 10 opens due to its springback to have a bending angle θ1 (θ2) of 90°. Accordingly, the arm member 1 having a predetermined accurate dimension can be obtained.

Thus, the step of pressing the end portion of the main body 10 by an amount corresponding to the expected springback of the main body can eliminate troublesome steps of correcting the main body 10, resulting in a simplified manufacturing process and enhanced manufacturing efficiency. Furthermore, since both the end portions of the main body 10 are not required to be cut off, the yield of the main body 10 can be improved. This further simplifies the manufacturing process and enhances the manufacturing efficiency.

Furthermore, since the step of joining the joint member 26 to the main body 10 is performed by a friction agitation joining method, the rubber elastic characteristic of the vibroisolating bush 24 will not be lost by the joining heat.

As mentioned above, since the main body 10 is made of a hollow member, or a pipe, the arm member 1 is light in weight. Also, since both the main body 10 and joint member 26 are made of an aluminum or aluminum alloy, the arm member 1 is extremely light in weight.

Since the arm member 1 is provided with the main body 10 with a tensile strength of more than 10 kgf/mm² but less than 50 kgf/mm², the arm member 1 with a required strength can be obtained while keeping an easy bending operation of the main body 10. In addition, since the arm member 1 is obtained by bending the main body 10 so that the bending radius R1 (R2) becomes at least twice an external diameter D of the main body 10, the main body 10 does not have any defects, such as wrinkles or cracks, and that the bent portions 12a and 12b are not crashed. Also, since the bent portions 12a and 12b have a good bending condition, the arm member 1 has high strength reliability.

The present invention is not limited to the aforementioned embodiment, and allows various modifications.

For example, the present invention can be applied to a method of manufacturing an arm member having a V-shaped main body.

Also, the bush 24 may be mounted into a bush mounting portion 20 by inserting the bush 24 into a bush mounting bore 21 and then drawing the bush mounting potion 20 to fix the bush 24 therein.

The present invention may be applied to a method of manufacturing an arm member with the joint member 26 connected to only one end of the main body 10.

The joint member 26 may be fixed to the main body 10 by a solid joining method such as the aforementioned friction agitation joining method and a friction pressure welding method, a fusion welding method such as MIG and TIG welding, or a caulking method.

In the present invention, the joint member may have a ball joint mounting portion (not shown) for mounting a ball joint or a yoke portion (not shown).

Furthermore, in the present invention, the punch 40 may be divided into two parts, right and left halves, so that the main body 10 can be easily detached from the punch 40.

### 〈Evaluation〉

In the following evaluation, arm members as shown in the aforementioned embodiment were manufactured.

### 〈Example 1〉

As the main body 10, a JIS (Japanese Industrial Standard) A6061-T6 aluminum alloy extruded straight pipe of a circular cross-section (the external diameter of 25 mmϕ, the thickness of 4 mm, and the tensile strength of 30 kgf/mm²) was prepared. Joint members 26 and 26 were fixed to both ends of the straight main body 10 by a friction agitation joining method. Then, the main body 10 with the joint members 26 and 26 was bent into a generally U-shape to obtain the predetermined arm member 1. Each of the bending radius R1 and R2 of the bent portions 12a and 12b was 100 mm.

### 〈Example 2〉

An arm member 1 was manufactured in the same manner as in Example 1. Each of the bending radius R1 and R2 of the bent portions 12a and 12b was 50 mm.

### 〈Comparative Example 1〉

An arm member 1 was manufactured in the same manner as in Example 1. Each of the bending radius R1 and R2 of the bent portions 12a and 12b was 25 mm.

In the arm members 1 according to the aforementioned examples, the bent portions 12a and 12a of each main body 10 were visually inspected. The results are shown in Table 1. In Table 1, N denotes a value that the bending radius R is divided by the external diameter D of the main body 10.

**Table 1**

| | Bending Radius R (mm) | N =(Bending Radius R)/(External Diameter D) | Condition of Bent Portion |
|---|---|---|---|
| Example 1 | 100 | 4 | Good |
| Example 2 | 50 | 2 | Good |
| Comparative Example 1 | 25 | 1 | Not good |

Table 1 reveals that the main bodies of the arm members according to Examples 1 and 2 have bent portions with a good bending condition. Thus, it was confirmed that an arm member with high strength reliability of bent portions can be obtained by bending the main body so as to have a bending radius at least twice an external diameter of the main body.

As mentioned above, according to the present invention, a method of manufacturing an arm member comprising a bar-like main body of a predetermined shape and a joint member attached to at least one end of the main body, includes the steps of: manufacturing a hollow straight main body; attaching a joint member to at least one end of the straight main body; and bending the straight main body with the joint member into the predetermined shape in accordance with a mounting space.

Since the main body is made of a hollow member, the arm member can be light in weight. Furthermore, since the bending step of the main body is performed after the attaching step of the joint member to the straight main body, when attaching the joint member to one end of the main body, the other end of the main body does not obstruct the attaching operation of the joint member. Thus, the work efficiency of attaching the joint member to the main body can be enhanced.

In the case where the step of bending the main body is performed by pressing the main body in a direction perpendicular to an axis thereof by and between a punch and a receiving die having a forming recess corresponding to the punch, the end portions are not required to be cut off because the end portions are not gripped by a pipe bender or the like. This enhances the yield of the main body and simplifies the manufacturing steps.

Also, in a case where an end portion of the main body which is bent in the forming recess by the punch is further pressed in a bending direction of the main body by using a pressing die, an arm member having an accurate dimension can be obtained by further pressing the main body by an amount corresponding of the expected springback. Furthermore, no correcting step of enhancing the accuracy of the dimension is required, which further simplifies the manufacturing steps.

In the case where the main body has a tensile strength of more than 10 kgf/mm² but less than 50 kgf/mm², and that the main body is bent to have a bending radius of at least twice an external diameter of the main body, the arm member with the required strength can be obtained. Furthermore, the arm member having a bent portion with high strength reliability can be provided.

The present invention claims a priority based on Japanese Patent Application No. H10-350174 filed on December 9, 1998, the content of which is incorporated hereinto by reference in its entirety.

The terms and descriptions in this specification are used only for explanatory purposes and the present invention is not limited to these, but many modifications and substitutions may be made without departing from the spirit of the scope of the present invention which is defined by the appended claims.

## Claims

1. A method of manufacturing an arm member comprising a bar-like main body of a predetermined shape and a joint member attached to at least one end of the main body, the method, including the steps of:
manufacturing a hollow straight main body;
attaching a joint member to at least one end of said straight main body; and
bending said straight main body with said joint member into a predetermined shape in accordance with a mounting space.

2. The method of manufacturing an arm member as recited in claim 1, wherein a step of bending said main body is performed by pressing said main body in a direction perpendicular to an axis thereof by using a punch and a receiving die having a forming recess corresponding to said punch.

3. The method of manufacturing an arm member as recited in claim 2, further including a step of pressing said at least one end of said main body by a pressing die in a bending direction of the main body.

4. The method of manufacturing an arm member as recited in claim 1, wherein said main body has a tensile strength more than 10 kgf/mm² but less than 50 kgf/mm², and wherein a step of bending said main body is performed so that a bending radius of main body becomes at least twice an external diameter of the main body.

5. The method of manufacturing an arm member as recited in claim 1, wherein a step of manufacturing said hollow straight main body is performed by extruding a metallic material.

6. The method of manufacturing an arm member as recited in claim 1, wherein a step of manufacturing said hollow straight main body is performed by extruding an aluminum or aluminum alloy.

7. The method of manufacturing an arm member as recited in claim 1, wherein the joint member is made of an aluminum or aluminum alloy.

8. The method of manufacturing an arm member as recited in claim 1, wherein a step of attaching the joint member to the main body is performed by a friction agitation joining method.

9. The method of manufacturing an arm member as recited in claim 1, wherein a step of attaching the joint member to the main body is performed by a fusion welding method.

10. The method of manufacturing an arm member as recited in claim 1, wherein the joint member is a bush mounting portion with a bush mounting bore for mounting a bush.

11. The method of manufacturing an arm member as recited in claim 1, wherein a step of bending said main body is performed so that said main body is bent in a generally U-shaped.

12. The method of manufacturing an arm member as recited in claim 1, wherein a step of bending said main body is performed so that said main body is bent in a generally V-shaped.
